# EUROPÄISCHE PATENTSCHRIFT

(11) **EP 1 305 930 B1**
(45) Veröffentlichungstag und Bekanntmachung des Hinweises auf die Patenterteilung: **23.03.2005**
(21) Anmeldenummer: 01956401.2
(22) Anmeldetag: 27.07.2001
(51) Int. Cl.: H04L 29/06, G05B 19/418

(54) **SYSTEM UND VERFAHREN ZUR ÜBERTRAGUNG VON OPC-DATEN ÜBER DATENNETZE, INSBESONDERE INTERNET, MIT ASYNCHRONER DATENVERBINDUNG**
SYSTEM AND METHOD FOR TRANSMITTING OPC DATA VIA DATA NETWORKS, IN PARTICULAR THE INTERNET USING AN ASYNCHRONOUS DATA CONNECTION
SYSTEME ET PROCEDE POUR TRANSMETTRE DES DONNEES OPC PAR L'INTERMEDIAIRE DE RESEAUX DE DONNEES, NOTAMMENT PAR INTERNET, AU MOYEN D'UNE COMMUNICATION DE DONNEES ASYNCHRONE

(30) Priorität: 03.08.2000 DE 10038552
(43) Veröffentlichungstag der Anmeldung: 02.05.2003
(73) Patentinhaber: SIEMENS AKTIENGESELLSCHAFT, 80333 München (DE)
(72) Erfinder: VOLKMANN, Frank, 90475 Nürnberg (DE); TALANIS, Thomas, 91336 Heroldsbach (DE); SEBALD, Marcus, 91056 Erlangen (DE); SCHMOLKA, Heinz-Christoph, 76676 Graben-Neudorf (DE); HEYMANN, Roland, 91054 Erlangen (DE); BAUER, Thomas, 76297 Stutensee (DE)
(86) Internationale Anmeldenummer: PCT/DE2001/002858
(87) Internationale Veröffentlichungsnummer: WO 2002/013482

(56) Entgegenhaltungen:
- US-A- 6 020 884
- SPREITZER M ET AL: "HTTP Next Generation'" NINTH INTERNATIONAL WORLD WIDE WEB CONFERENCE, AMSTERDAM, NETHERLANDS, 15-19 MAY 2000, [Online] Bd. 33, Nr. 1-6, Seiten 593-607, XP002181917 Computer Networks, June 2000, Elsevier, Netherlands ISSN: 1389-1286
- MARTIN-FLATIN J -P ET AL: "JAMAP: a Web-based management platform for IP networks" ACTIVE TECHNOLOGIES FOR NETWORK AND SERVICE MANAGEMENT. 10TH IFIP/IEEE INTERNATIONAL WORKSHOP ON DISTRIBUTED SYSTEMS: OPERATIONS AND MANAGEMENT, DSOM'99. PROCEEDINGS (LECTURE NOTES IN COMPUTER SCIENCE VOL.1700), ACTIVE TECHNOLOGIES FOR NETWORK AND SE, Seiten 164-178, XP002181916 1999, Berlin, Germany, Springer-Verlag, Germany ISBN: 3-540-66598-6
- HIMSTEDT S ET AL: "OPC - OLE FOR PROCESS CONTROL EIN STANDARD UNTER VIELEN ODER EINE REVOLUTION FUER DIE AUTOMATISIERUNGSTECHNIK?" ELEKTRONIK, FRANZIS VERLAG GMBH. MUNCHEN, DE, Bd. 46, Nr. 7, 1. April 1997 (1997-04-01), Seiten 56-58,60, XP001031939 ISSN: 0013-5658

## Beschreibung

Die Erfindung betrifft ein System sowie ein Verfahren zur Übertragung von OPC-Daten über Datennetze, insbesondere Internet, mit asynchroner Datenverbindung.

Unter OPC (OLE for Process Control) versteht man eine einheitliche und herstellerunabhängige Spezifikation einer Softwareschnittstelle zwischen Windows-Applikationen und Automatisierungssystemen, insbesondere der Fertigungssteuerung und -automatisierung, welche den Datenfluss zwischen den unterschiedlichsten Systemen, Anwendungen und Geräten problemlos ermöglicht. OPC stellt somit eine Verbindung von Prozess-Steuerung, statistischer Fertigungssteuerung, Prozessoptimierung, anderen Produktionsanwendungen, z.B. Anwendungen für die Ausführung der Fertigung oder für die Produktionsverwaltung, den entsprechenden Echtzeit-Geräten sowie Windows-Applikationen dar. Sie bietet dazu eine Reihe OLE- bzw. COMbasierter Standardschnittstellen und weiterer angepasster Schnittstellen, sogenannten Interfaces.

Mit Hilfe von Datennetzen ist es möglich, von beliebigen Rechnern, sogenannten Clients aus, die Zugang zu diesen Datennetzen haben, eine Datenverbindung zu einem Server aufzubauen. Dies gilt insbesondere für das World Wide Web (WWW), welches auch als Internet bezeichnet wird. Die im folgenden verwendeten Begriffe Web- oder Internet-Server bzw. Web- oder Internet-Client dienen zur Verdeutlichung der Zugehörigkeit zum speziellen Datennetz Internet, unterscheiden sich funktionell aber nicht von der Bedeutung der Begriffe Client bzw. Server, die für alle möglichen Datennetze verwendet werden. Unter den Begriffen OPC-Client bzw. OPC-Server werden im folgenden solche Rechner verstanden, die zusätzlich Daten im OPC-Datenformat verarbeiten können. Im folgenden wird auch dann, wenn lediglich die Bezeichnung Client, bzw. Server verwendet wird, hierunter ein OPC-Client bzw. OPC-Server verstanden.

Im Internet wird eine Datenverbindung zu einem sogenannten Web- oder Internet-Server aufgebaut. Der Zugriff auf einen Internet-Server erfolgt beispielsweise mit Hilfe bekannter Internet-Browser, z.B. dem Internet Explorer der Firma Microsoft oder dem Netscape Communicator der Firma Netscape. Beim Aufbau einer Datenverbindung von einem sogenannten Web- oder Internet-Client aus wird eine Anfrage, ein sogenannter Request an einen Internet-Server durch Eingabe und Abschicken einer sogenannten URL-Adresse abgegeben. Beim Zustandekommen einer Datenverbindung antwortet der gerufene Internet-Server mit einer sogenannten HTML-Seite (HTML = Hyper Text Markup Language), auch Web-Page genannt. Die sogenannten Web-Clients kommunizieren mit den Web-Servern mittels Transportprotokollen. Jeder Datenverbindung zwischen Web-Client und Web-Server liegt somit ein Anfrage-, ein sogenanntes Request-Protokoll und als Reaktion darauf ein Antwort-, ein sogenanntes Response-Protokoll zugrunde.

Internetverbindungen ermöglichen einen raschen Datenaustausch zwischen räumlich weit entfernten Orten. In Verbindung mit der OPC-Technologie können somit unterschiedlichste Systeme, Applikationen und Geräte, die sich räumlich sehr weit voneinander entfernt befinden können, einfach und schnell miteinander kommunizieren. Bis heute ist es jedoch nicht möglich, die OPC-Technologie in vollem Funktionsumfang mit dem Internet zu koppeln, da hierzu ein asynchrones Datenübertragungsverfahren, also eine zeitlich unabhängige, bidirektionale Kommunikation nötig wäre, welche im Internet bisher nicht möglich ist.

Die US-A-6 020 884 beschreibt ein System und ein Verfahren zur Verbesserung einer Internet Browser-Anwendung. Dabei werden Präferenzen eines Anwenders bestimmt und die Interaktion des Anwenders mit anderen Anwendern, welche ähnliche Präferenzen haben und in einer so genannten Community zusammengeschlossen sind, erleichtert, indem dem Community zugeordnete Inhalte Verknüpfungen zu online-Inhalten erhalten und synchrone und asynchrone Interaktionen mit den Anwendern der Community erfolgen.

Der Fachartikel Himstedt , Steffen et al: "OPC-OLE For Process Control, Ein Standard unter vielen oder eine Revolution für die Automatisierungstechnik?"; Elektronik, Franzis Verlag GmbH, München, Bd. 46, Nr. 7, 1. April 1997, Seiten 56 bis 60 beschreibt eine einheitliche Datenschnittstelle namens OPC (OLE For Process Control). Um die für die Automatisierungstechnik erforderliche Interoperabilität zu erreichen, werden drei hierarchisch abgestufte Objekte eines OPC-Servers definiert, der Server, Gruppen und Items. Dabei bildet der OPC-Server die realen Objekte auf Items ab. Clients können diese Items für den Datenzugriff in Gruppen organisieren. Über die definierten Gruppen kommuniziert der Client mit dem Server. Dabei können synchrone und asynchrone Zugriffe erfolgen. Bei synchronen Zugriffen wird die Funktion erst nach vollständiger Bearbeitung beendet. Asynchrone Aufrufe reihen dagegen die Aufträge in eine Queue des Servers ein und kehren dann sofort zum Client zurück.

Der Erfindung liegt die Aufgabe zugrunde, ein System und ein Verfahren zur Übertragung von OPC-Daten über Datennetze, insbesondere Internet, anzugeben, die eine zeitlich unabhängige, bidirektionale Übertragung von OPC-Daten auch zwischen wenigstens zwei mit Datennetzen, insbesondere Internet koppelbaren Datenverarbeitungsvorrichtungen auch hinter Datenschutzeinrichtungen, insbesondere Firewalls, ermöglichen, auch wenn eine der Datenverarbeitungsvorrichtungen im Datennetz, insbesondere Internet, nicht sichtbar ist.

Diese Aufgabe wird durch ein Verfahren zur Übertragung von OPC-Daten über Datennetze, insbesondere Internet gelöst, bei dem von einem OPC-Client aus über eine Datenverbindung eine erste Verbindungsanforderung zum Aufbau mindestens eines ersten Übertragungskanals an wenigstens einen OPC-Server gesendet wird, wobei mindestens eine Datenverbindung, insbesondere ein Übertragungskanal permanent offen ist, welcher zu beliebiger Zeit zum, von Aktionen des OPC-Clients unabhängigen Senden von Daten von wenigstens einem OPC-Server zum OPC-Client über wenigstens ein Datennetz vorgesehen ist.

Diese Aufgabe wird durch ein System zur Übertragung von OPC-Daten über Datennetze, insbesondere Internet gelöst, mit mindestens einer mit einem Datennetz, insbesondere Internet koppelbaren Datenverarbeitungsvorrichtung eines OPC-Client, wobei die erste Datenverarbeitungsvorrichtung zum Aufbau mindestens einer Datenverbindung in Form eines ersten Übertragungskanals an wenigstens einen OPC-Server vorgesehen ist, wobei mindestens eine Datenverbindung, insbesondere ein Übertragungskanal permanent offen ist, welcher zu beliebiger Zeit zum, von Aktionen des OPC-Clients unabhängigen Senden von Daten von wenigstens einem OPC-Server zum OPC-Client über wenigstens ein Datennetz vorgesehen ist.

Der Erfindung liegt die Erkenntnis zugrunde, daß mit Hilfe des Internets eine echte "aktive" Datenverbindung zu einem, im Internet nicht sichtbaren Client, insbesondere OPC-Client nicht möglich ist, sondern lediglich eine Datenverbindung zwischen einem beliebigen mit dem Internet verbundenen Client mit jedem beliebigen, im Internet sichtbaren Server, insbesondere OPC-Server. Dieser Nachteil wird auf überraschend einfache Weise dadurch gelöst, daß vom Client aus zunächst ein erster Übertragungskanal zum Server eines Automatisierungssystems aufgebaut wird. Hierzu wird vom Client aus, der nach Herstellung der bidirektionalen Datenverbindungen als vollwertiges Bedien- und Beobachtungssystem des Automatisierungssystems dienen kann, eine erste Verbindungsanforderung an den Server des Automatisierungssystems gesendet. Der Server beantwortet diese Verbindungsanforderung und zur permanenten Offenhaltung dieser Datenverbindung überträgt der Internet-Server beispielsweise auch beim Nichtvorhandensein von Nutzdaten, insbesondere OPC-Nutzdaten Scheindaten an den Client bzw. sendet Informationen an den Client, die dem Client mitteilen, daß noch eine Übertragung von Nutzdaten beabsichtigt ist. Scheindaten sind dabei Daten, die zum Zweck der Aufrechterhaltung der Datenverbindung vom Server selbst generiert und an den Client gesendet werden.
Hierdurch wird eine permanent offene Datenverbindung installiert, über die der Server, insbesondere ein OPC-Server und damit das Automatisierungssystem jederzeit und unabhängig von Aktionen des Clients, insbesondere eines OPC-Clients asynchron Daten, insbesondere OPC-Daten an den Client und damit an das B&B-System senden kann.

Unabhängig und parallel dazu können Client und Server auch konventionell im Internet miteinander kommunizieren, indem der Client jeweils einen neuen Request an den Server richtet, der von diesem mit einem entsprechenden Response beantwortet wird.

Somit steht ein System voneinander unabhängiger Datenverbindungen zur Verfügung, mittels derer sowohl der Client, also das B&B-System, wie auch das Automatisierungssystem von sich aus miteinander kommunizieren können. Zwischen Client und Server oder mit anderen Worten zwischen Bedien- und Beobachtungssystem und Automatisierungssystem wird funktional eine bidirektionale Datenverbindung sichergestellt, die insbesondere auch eine Datenübertragung vom Server aus an den Client ermöglicht, da der Server ständig über einen permanent offenen Übertragungskanal mit dem Client verbunden ist, so daß eine zeitlich voneinander unabhängige bidirektionale Datenübertragung in beiden Richtungen zwischen Client und Server ermöglicht wird. Eine derartige Datenverbindung ist besonders zum Bedienen und Beobachten eines Automatisierungssystems geeignet, wobei der Client als Bedien- und Beobachtungssystem fungieren kann, welches von jedem beliebigen, mit dem Internet verbundenen Rechner aus aktivierbar ist. Im Gegensatz zu konventionellen Internet-Datenverbindungen ergibt sich somit ein asynchrones Datenübertragungsverfahren, das vom Client nicht die Notwendigkeit fordert, im Internet sichtbar zu sein, oder einen sogenannten Web-Server (IIS = Internet Information Server) installiert zu haben. Dadurch wird es möglich, von jedem beliebigen Ort der Welt, vor und hinter Datenschutzeinrichtungen, insbesondere Firewalls, eine bidirektionale Datenverbindung zu einem Server aufzubauen. Da die Datenverbindung vom Client aus, d.h. vom B&B-System aus, aktiviert wird, ist es nicht erforderlich, daß der Server von sich aus aktiv eine Datenverbindung zum Client aufbaut. Darüber hinaus ist auch eine Änderung der Konfiguration des Clients nicht erforderlich.

Eine permanente Aufrechterhaltung einer Datenverbindung kann dadurch sichergestellt werden, daß zur Erhaltung mindestens eines Übertragungskanals auch beim Nichtvorhandensein von Nutzdaten Scheindaten übertragen werden.

Eine besonders vorteilhafte Ausgestaltung der Erfindung ist dadurch gekennzeichnet, daß die Scheindaten vom Server an den Client gesendet werden. Dabei hat es sich als besonders vorteilhaft erwiesen, daß beim Nichtvorhandensein von Nutzdaten alle 25-35 sec. Scheindaten vom Server zum Client übertragen werden, um die Datenverbindung offen zu halten.

Eine weitere vorteilhafte Ausgestaltung der Erfindung ist dadurch gekennzeichnet, daß zur Aufrechterhaltung einer permanenten Datenverbindung, insbesondere eines Übertragungskanals zwischen Server und Client, der Server dem Client Informationen sendet, die dem Client mitteilen, daß eine Übertragung von Daten beabsichtigt ist.

Eine weitere vorteilhafte Ausgestaltung der Erfindung ist dadurch gekennzeichnet, daß zur permanenten Aufrechterhaltung einer Datenverbindung insbesondere eines Übertragungskanals zwischen Server und Client, über den vom Server Datenmengen bis zu einer festgelegten Größe übertragen werden, vom Server vor Erreichung der festgelegten Datenmenge eine Aufforderung zu einer neuen Verbindungsanforderung an den Client gesendet wird und daraufhin vom Client eine neue Verbindungsanforderung zum Aufbau mindestens eines neuen Übertragungskanals an den Server gesendet wird. Als sehr vorteilhaft hat sich eine Größe von 15 - 25 MB für die zu übertragenden Datenmengen über einen Übertragungskanal erwiesen, da dies die Performance, bzw. die Antwortzeiten des Systems wegen der Kommunikation über Firewallrechner hinweg außerordentlich verbessert und damit das Kosten-/Nutzenverhältnis am effektivsten ist.

Eine weitere vorteilhafte Ausgestaltung der Erfindung ist dadurch gekennzeichnet, daß zur Steuerung der Datenübertragung ein Transportprotokoll, insbesondere ein Internet-Transportprotokoll vorgesehen ist. Dabei hat sich der Einsatz des Hypertext Transport Protocol (HTTP) als Transportprotokoll als besonders vorteilhaft erwiesen, da dessen Anwendung außerordentlich einfach und der Anpassungsaufwand sehr gering ist.

Eine besonders vorteilhafte Anwendung der Erfindung, unter Nutzung vorhandener Infrastrukturen, insbesondere Internet-Infrastrukturen für eine bidirektionale Datenübertragung, besteht darin, daß das Verfahren zum Bedienen und Beobachten beispielsweise eines Automatisierungssystems über wenigstens ein Datennetz, insbesondere über Internet, vorgesehen ist, da dadurch beispielsweise Ferndiagnosen sehr einfach realisiert werden können, wodurch die Analyse von auftretenden Fehlern und deren Behebung im laufenden Betrieb von beispielsweise Automatisierungssystemen an räumlich weit voneinander entfernten Orten kostengünstig durchgeführt werden können.

Eine weitere vorteilhafte Ausgestaltung der Erfindung ist dadurch gekennzeichnet, daß der Client nicht im Internet sichtbar sein, bzw. keinen Internet Information Server (IIS) installiert haben muß.

Eine Verbindung der Automatisierungs- und Kommunikationstechnik kann auf einfache Weise derart gestaltet sein, daß das Bedien- und Beobachtungssystem des Client die Bereitstellung mindestens eines Übertragungskanals als verteiltes Objekt, insbesondere als DCOM-Objekt initiiert und daß der Verbindungsaufbau zum Automatisierungssystem über einen DCOM-Server erfolgt.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines Automatisierungssystems mit Internet-Kopplung zum Bedienen und Beobachten unter Verwendung der OPC-Technologie,
- FIG 2: eine schematische, zeitliche Darstellung für mögliche OPC-Nutzdatenkommunikation zwischen OPC-Client und Automatisierungssystem über einen OPC-Server und
- FIG 3: ein Beispiel für die OPC-Kommunikation zwischen vernetzten OPC-Clients und vernetzten OPC-Servern über Internet.

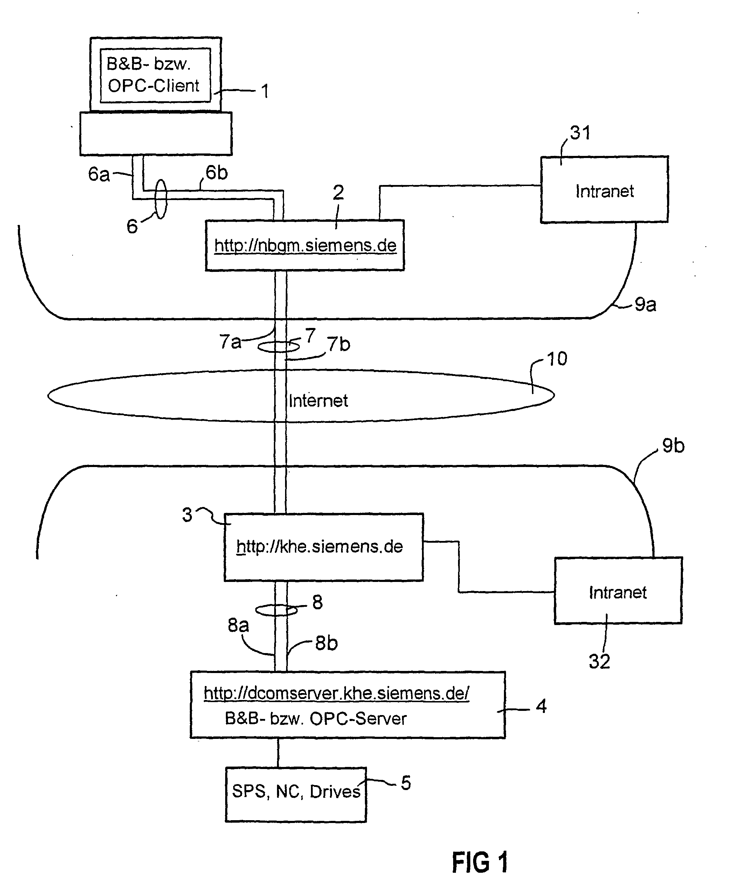

Figur 1 zeigt ein Ausführungsbeispiel eines Systems zum Bedienen und Beobachten von Automatisierungssystemen 5, welche beispielsweise speicherprogrammierbare Steuerungen (SPS), numerische Steuerungen (NC) und/oder Antriebe (Drives) aufweisen. Das System weist ein Bedien- und Beobachtungssystem 1 (B&B-Client) auf , welches über ein internes Datennetz 6, z.B. Ethernet mit einem Firewall-Rechner 2 gekoppelt ist. Der B&B-Client 1 ist bei dem gezeigten Beispiel gleichzeitig auch OPC-Client 1. Dem Bedien- und Beobachtungssystem 1, welches im folgenden abkürzend auch als B&B-System 1 bezeichnet wird, ist eine lokale Intranet-Adresse zugeordnet, die im Internet nicht bekannt sein muß. Mit Hilfe der Linie 9a ist in Fig. 1 der Firewall des Firewall-Rechners 2 angedeutet, der das interne Kommunikationsnetz 31 (= Intranet 31) des Firewall-Servers 2 umgibt. Mit dem Bezugszeichen 10 ist das weltweite Datenkommunikationsnetz Internet gekennzeichnet. Der Firewall-Rechner 2 ist über eine Verbindungsleitung 7, z.B. ISDN mit dem Internet 10 koppelbar. Das Automatisierungssystem 5 ist über einen Internet-Server 4, der als B&B-Server 4 für das Automatisierungssystem 5 dient und der beispielsweise die Internet-Adresse dcomserver.khe.siemens.de/ aufweist, über eine Verbindungsleitung 8 und jeweils einen zweiten Firewall-Rechner 3 mit dem Internet 10 koppelbar. Der B&B-Server 4 ist bei dem gezeigten Beispiel gleichzeitig auch OPC-Server 4. Die zweite Firewall 9b umgibt das, dem Firewall-Rechner 3 zugeordnete Intranet 32. Der Firewall-Rechner 3 ist im Internet 10 beispielsweise unter der Internet-Adresse khe.siemens.de sichtbar.
Die Datenverbindung 6, 7, 8 zwischen dem Client 1 und dem Server 4 ist zur besseren Darstellung und Erläuterung der jeweiligen Senderichtung bei der Kommunikation zwischen Client 1 und Server 4 und umgekehrt in der Figur 1 in Form zweier Teilkanäle dargestellt. Diese Teilkanäle beinhalten einen ersten Übertragungskanal 6a, 7a, 8a, der die Kommunikationsrichtung vom Client 1 zum Server 4 symbolisiert und einen zweiten Übertragungskanal 6b, 7b, 8b, der die Kommunikationsrichtung vom Server 4 zum Client 1 symbolisiert. Physikalisch sind die beiden dargestellten Teilkanäle ein einziger Übertragungskanal, d.h. für eine Antwort vom Server 4 auf eine zugehörige Anfrage vom Client 1 an den Server 4 wird derselbe physikalische Übertragungskanal verwendet.

Im folgenden soll anhand eines Verbindungsaufbaus zwischen dem Client 1 und dem Server 4 beispielhaft der Aufbau einer zeitlich voneinander unabhängigen, bidirektionalen Sende- und Empfangsverbindung zwischen dem Client 1 und dem Server 4 über das Internet 10 erläutert werden. Hierzu kommt ein asynchrones Verfahren zum Einsatz, welches es ermöglicht, daß der Server 4 Daten an den Client 1 senden kann, unabhängig von Aktionen des Clients 1, der selbst im Internet 10 nicht sichtbar zu sein braucht, d.h. über keine eigene gültige Internet-Adresse verfügt.
Hierzu schickt der Client 1 eine erste Anfrage, einen sogenannten Request, über Internet 10 an den Server 4 über den ersten Übertragungskanal 6a, 7a, 8a, worauf der Server 4 mit einer Antwort, einem sogenannten Response, über den zweiten Übertragungskanal 6b, 7b, 8b reagiert. Zur Vermeidung einer zeitlichen Unterbrechung der Antwort, und damit eines Abbruchs der Datenverbindung 6, 7, 8 wird die Dauer der Antwort "unendlich" lang ausgedehnt. Hierzu wird dem System beispielsweise mitgeteilt, daß noch weitere Daten geschickt werden sollen. Hierdurch ergibt sich eine permanent offene Datenverbindung 6, 7, 8, über die der Server 4 und damit das Automatisierungssystem 5 jederzeit und unabhängig von Aktionen des Clients 1 asynchron Daten an den Client 1 und damit an das B&B-System 1 senden kann. Um die Datenverbindung 6,7,8 permanent offen zu halten, ist es beispielsweise auch möglich, Scheindaten in regelmäßigen Intervallen, vorteilhafterweise alle 25-35 sec vom Server 4 an den Client 1 zu senden.

Unabhängig von dieser permanent offenen Datenverbindung 6,7,8 kann zwischen dem Client 1 und dem Server 4 darüber hinaus eine "normale" Kommunikation über das Internet 10 stattfinden, d.h. der Client 1 sendet einen Request an den Server 4 über einen neuen Übertragungskanal und der Server 4 beantwortet diesen Request mit einem entsprechenden Response über diesen Übertragungskanal. Nach erfolgter Übertragung der Daten wird der neue Übertragungskanal wieder geschlossen. Somit können der Client 1 sowie der Server 4 zeitlich unabhängig voneinander bidirektional Daten senden und empfangen.
Zur Steuerung der Datenübertragung wird ein Transportprotokoll, insbesondere ein Internet-Transportprotokoll eingesetzt. Vorteilhafterweise wird dazu das Hypertext Transport Protocol (HTTP) als Transportprotokoll verwendet.

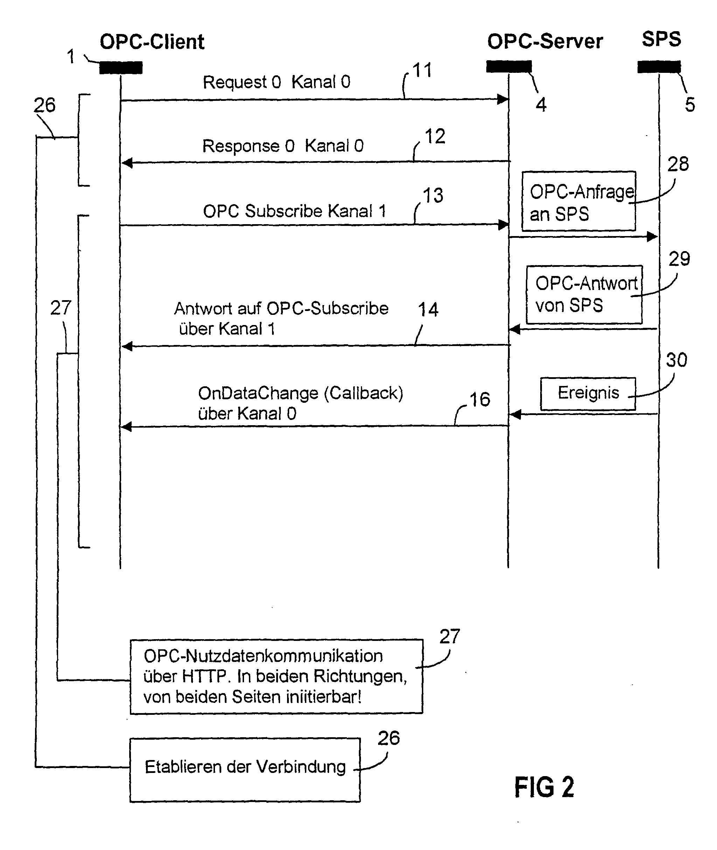

Figur 2 zeigt den zeitlichen Ablauf der Etablierung 26 einer permanent offenen Datenverbindung 6, 7, 8 zwischen einem OPC-Client 1 und einem OPC-Server 4, an den ein beispielhaft als SPS (= Speicherprogrammierbare Steuerung) bezeichnetes Automatisierungssystem 5 angeschlossen ist. Die Darstellung erfolgt mit Hilfe der UML-Notation (Unified Modelling Language). Weiterhin zeigt Fig. 2 die bidirektionale Kommunikation, die nach Etablierung der Datenverbindung zeitlich unabhängig voneinander von OPC-Client 1 und OPC-Server 4 initiiert werden kann. Der zeitliche Ablauf zur Etablierung der Datenverbindung ist folgender: Der OPC-Client 1 stellt einen Request 11 an den Server 4, der diesen mit einer Response 12 beantwortet, wobei diese Datenverbindung nicht abgebaut wird. Dazu wird dem OPC-Client 1 beispielsweise mitgeteilt, daß noch weitere Daten geschickt werden sollen, wodurch diese Datenverbindung permanent offen gehalten wird. Um die Datenverbindung permanent offen zu halten, ist es beispielsweise auch möglich, Scheindaten in regelmäßigen Intervallen, insbesondere alle 25-35 sec vom OPC-Server 4 an den OPC-Client 1 zu senden, falls keine OPC-Nutzdaten gesendet werden können.

Dadurch kann der OPC-Server 4 sowie das mit dem OPC-Server 4 gekoppelte Automatisierungssystem 5 zu beliebiger Zeit unabhängig vom OPC-Client 1 Daten an den OPC-Client 1 senden. Nach der Response 12 des OPC-Servers 4 setzt beispielsweise das B&B-System 1 einen OPC-Call, welcher im OPC-Datenformat vorliegt, an das Automatisierungssystem 5 ab. Dazu konvertiert der OPC-Client 1 den OPC-Call, welcher im OPC-Datenformat vorliegt, in einen OPC Subscribe im internetfähigen Datenformat. Der OPC-Client 1 sendet den OPC-Subscribe 13 über eine neue Datenverbindung an den OPC-Server 4. Der OPC-Server 4 konvertiert den OPC-Subscribe im internetfähigen Dätenformat wieder in den ursprünglichen OPC-Call im OPC-Datenformat. Dieser wird als OPC-Anfrage 28 an die SPS 5 weitergeleitet. Die SPS sendet eine OPC-Antwort 29 im OPC-Datenformat an den OPC-Server 4 zurück, der die OPC-Antwort in ein internetfähiges Datenformat konvertiert und sie als Antwort 14 an den OPC-Client 1 weiterleitet (= synchrones Verhalten). Diese Datenverbindung wird nach erfolgter Datenübertragung wieder geschlossen. Der OPC-Client 1 konvertiert die Antwort im internetfähigen Datenformat wiederum in das ursprüngliche OPC-Format und leitet sie zur weiteren Verarbeitung an das B&B-System 1 weiter.

Unabhängig und parallel dazu kann der OPC-Server 4 dem OPC-Client 1 über die permanent offene Datenverbindung z.B. Meldungen, Alarme oder auch Variablenänderungen mitteilen, als Reaktionen auf ein Ereignis 30 in der SPS 5, **ohne** daß vorher der OPC-Client 1 eine Anfrage gestellt hat (= asynchroner On-DataChange oder Callback 16). Der OPC-Server 4 und der OPC-Client 1 führen dazu jeweils die bereits beschriebenen, notwendigen Konvertierungen in die benötigten Datenformate durch. Diese Form der Kommunikation wäre bei einer "normalen" HTTP-Verbindung nicht möglich. Der asynchrone Callback 16 ist insbesondere zeitlich auch zwischen einem Request und einer noch nicht erfolgten Response möglich.

Insgesamt ergibt sich somit eine OPC-Nutzdatenkommunikation 27 über Internet in beide Richtungen, die von beiden Seiten aus iniziierbar und zeitlich voneinander unabhängig ist. Damit wird es möglich, vorhandene Kommunikationswege des Internet auch im Bereich der Automatisierungstechnik in gewohnter Weise, insbesondere den Einsatz der OPC-Technologie, für Bedien- und Beobachtungszwecke als HMI-Interface (Human Machine Interface) zu nutzen. Als vorteilhafte Anwendung kommt beispielsweise das Bedien- und Beobachtungssystem WinCC der Fa. Siemens in Betracht. Das erfindungsgemäße System und Verfahren ermöglicht die Übertragung von DCOM-Aufträgen von einem OPC-Client 1 zum OPC-Server 4. Das Besondere dabei ist, daß es das Verfahren erlaubt, daß der OPC-Server 4 DCOM-Ereignisse, sogenannte Events an seinen OPC-Client 1 senden kann, ohne daß dieser eine "echte", d.h. im Internet sichtbare Adresse besitzt. Der OPC-Client 1 braucht also nicht im Internet sichtbar sein. Er braucht auch keinen Internet Information Server (IIS) installiert zu haben. Auf der Client-Seite sind somit keine zusätzlichen Kosten erforderlich, da Internet-Browser wie beispielsweise der Internet-Explorer der Firma Microsoft oder der Netscape Communicator der Fa. Netscape überall verfügbar sind. Für einen Datenaustausch zwischen Automatisierungssystem und B&B-Anwender beispielsweise für Alarmierungszwecke sind somit keine speziellen Sonderlösungen erforderlich.

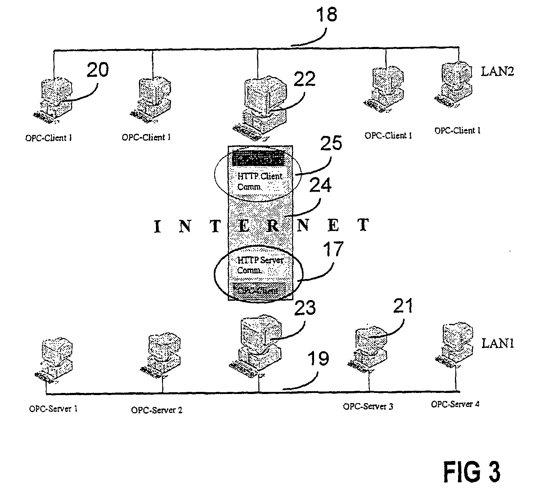

Figur 3 zeigt beispielhaft die OPC-Kommunikation zwischen vernetzten OPC-Clients und vernetzten OPC-Servern über Internet.
Mehrere OPC-Clients, von denen der Übersichtlichkeit halber nur ein OPC-Client 20 bezeichnet wurde, sind in einem ersten lokalen Kommunikationsnetz 18, beispielsweise Intranet oder LAN, miteinander vernetzt. In einem zweiten, vom ersten getrennten lokalen Kommunikationsnetz 19, beispielsweise Intranet oder LAN, sind mehrere OPC-Server, von denen der Übersichtlichkeit halber nur ein OPC-Server 21 bezeichnet wurde, miteinander vernetzt.

Um eine OPC-Kommunikation über Internet 24 zwischen den beiden lokalen Kommunikationsnetzen 18, 19 zu ermöglichen, fungiert ein Rechner 22 als HTTP-Client 25. Alle OPC-Calls der OPC-Clients des ersten lokalen Kommunikationsnetzes 18 werden zum Rechner 22 gesendet und von dort via Kommunikation über Internet 24 an den HTTP-Server 17, lokalisiert im Rechner 23 im zweiten lokalen Kommunikationsnetz 19, transportiert. Der Rechner 22 verhält sich somit aus Sicht der OPC-Clients wie ein OPC-Server 25 und ist gleichzeitig ein HTTP-Client 25 für die Kommunikation über Internet 24. Der HTTP-Server 17 leitet die empfangenen OPC-Aufrufe zu den zugehörigen OPC-Servern des zweiten lokalen Kommunikationsnetzes 19 weiter. Der Rechner 23 verhält sich somit aus Sicht der OPC-Server wie ein OPC-Client 17 und ist gleichzeitig ein HTTP-Server 17 für die Kommunikation über Internet 24.
Die Kommunikation über Internet 24 erfolgt mittels der in Figur 2 beschriebenen, von beiden Seiten aus iniziierbaren und zeitlich voneinander unabhängigen, bidirektionalen Sende- und Empfangsverbindung zwischen dem HTTP-Client 25, bzw. OPC-Server 25 und dem HTTP-Server 17, bzw. dem OPC-Client 17. Natürlich führen der HTTP-Client 25, bzw. OPC-Server 25 und der HTTP-Server 17, bzw. OPC-Client 17 dazu jeweils die bereits bei Figur 2 beschriebenen, notwendigen Konvertierungen in die benötigten Datenformate durch.

Zusammenfassend betrifft die Erfindung somit ein System sowie ein Verfahren zur Übertragung von OPC-Daten über Datennetze insbesondere Internet, insbesondere von OPC-Daten zum Bedienen und Beobachten eines Automatisierungssystems 5. Für eine bidirektionale Nutzdatenverbindung auch hinter Firewalls über Internet in beiden Richtungen auch von einem OPC-Client 1 aus, der nicht als Server im Internet sichtbar ist, wird ein Verfahren bzw. ein System vorgeschlagen, bei dem von einer ersten Datenverarbeitungsvorrichtung eines OPC-Client 1, insbesondere von einem Bedien- und Beobachtungssystem 1, aus über eine Datenverbindung 6, 7, 8, insbesondere Internetverbindung, eine erste Verbindungsanforderung zum Aufbau eines ersten Übertragungskanals 6a, 7a, 8a an einen B&B- bzw. OPC-Server 4 eines Automatisierungssystems 5 gesendet wird. Eine Response dazu erfolgt über einen zweiten Übertragungskanal 6b, 7b, 8b. Eine zeitlich unbegrenzte Nutzungsdauer der Datenverbindung 6, 7, 8 wird dadurch sichergestellt, daß zur Erhaltung der Datenverbindung 6, 7, 8 beispielsweise auch beim Nichtvorhandensein von OPC-Nutzdaten Scheindaten übertragen werden , oder, daß Informationen an den OPC-Client 1 gesendet werden, die dem Client 1 mitteilen, daß noch eine Übertragung von OPC-Nutzdaten beabsichtigt ist. Hierdurch ergibt sich eine permanent offene Datenverbindung 6,7,8 über die der B&B- bzw. OPC-Server 4 und damit das Automatisierungssystem 5 jederzeit und unabhängig von Aktionen des OPC-Clients 1 asynchron Daten an den OPC-Client 1 und damit an das B&B-System 1 senden kann.

## Patentansprüche

1. Verfahren zur Übertragung von OPC-Daten über Datennetze, insbesondere Internet (10), bei dem von einem OPC-Client (1) aus über eine Datenverbindung (6,7,8) eine erste Verbindungsanforderung zum Aufbau mindestens eines ersten Übertragungskanals an wenigstens einen OPC-Server (4) gesendet wird, wobei mindestens ein Übertragungskanal (6a,7a,8a) permanent offen ist, welcher zu beliebiger Zeit zum, von Aktionen des OPC-Clients (1) unabhängigen Senden von OPC-Daten von wenigstens einem OPC-Server (4) zum OPC-Client (1) über wenigstens ein Datennetz vorgesehen ist.

2. Verfahren nach Anspruch 1,
**dadurch gekennzeichnet,**
**daß** zur permanenten Aufrechterhaltung des Übertragungskanals zwischen wenigstens einem OPC-Server (4) und wenigstens einem OPC-Client (1) auch beim Nichtvorhandensein von OPC-Nutzdaten Scheindaten übertragen werden.

3. Verfahren nach Anspruch 2,
**dadurch gekennzeichnet,**
**daß** die Scheindaten vom OPC-Server (4) an den OPC-Client (1) gesendet werden.

4. Verfahren nach Anspruch 2 oder 3,
**dadurch gekennzeichnet,**
**daß** beim Nichtvorhandensein von OPC-Nutzdaten die Scheindaten alle 25-35 sec. vom OPC-Server (4) zum OPC-Client (1) übertragen werden.

5. Verfahren nach einem der vorstehenden Ansprüche,
**dadurch gekennzeichnet,**
**daß** zur permanenten Aufrechterhaltung des Übertragungskanals der OPC-Server (4) dem OPC-Client (1) Informationen sendet, die dem OPC-Client (1) mitteilen, daß eine Übertragung von Daten beabsichtigt ist.

6. Verfahren nach einem der vorstehenden Ansprüche,
**dadurch gekennzeichnet,**
**daß** zur permanenten Aufrechterhaltung des Übertragungskanals, über den vom OPC-Server (4) Datenmengen bis zu einer festgelegten Größe an den OPC-Client (1) übertragen werden, vom OPC-Server (4) vor Erreichung der festgelegten Datenmenge eine Aufforderung zu einer neuen Verbindungsanforderung an den OPC-Client (1) gesendet wird und daraufhin vom OPC-Client (1) eine neue Verbindungsanforderung zum Aufbau mindestens eines neuen Übertragungskanals an den OPC-Server (4) gesendet wird.

7. Verfahren nach einem der vorstehenden Ansprüche,
**dadurch gekennzeichnet,**
**daß** die zu übertragenden Datenmengen über den Übertragungskanal eine Größe von 15 - 25 MB aufweisen.

8. Verfahren nach einem der vorstehenden Ansprüche,
**dadurch gekennzeichnet,**
**daß** zur Steuerung der Datenübertragung ein Transportprotokoll, insbesondere ein Internet-Transportprotokoll, vorgesehen ist.

9. Verfahren nach Anspruch 8,
**dadurch gekennzeichnet,**
**daß** als Transportprotokoll ein Hypertext-Transport-Protocol vorgesehen ist.

10. Verfahren nach einem der vorstehenden Ansprüche,
**dadurch gekennzeichnet,**
**daß** das Verfahren zum Bedienen und Beobachten eines Automatisierungssystems (5) über Datennetze, insbesondere über Internet (10), vorgesehen ist.

11. Verfahren nach einem der vorstehenden Ansprüche,
**dadurch gekennzeichnet,**
**daß** OPC-Daten vor dem Senden über Internet von einer Sendestation in ein internetfähiges Datenformat konvertiert und an eine Empfangsstation über Internet gesendet werden und nach dem Senden, die im internetfähigen Datenformat empfangenen Daten von der Empfangsstation wieder in OPC-Daten konvertiert werden.

12. Verfahren nach einem der vorstehenden Ansprüche,
**dadurch gekennzeichnet,**
**daß** der OPC-Client (1) nicht im Internet (10) sichtbar ist.

13. Verfahren nach einem der Ansprüche 1 bis 12,
**dadurch gekennzeichnet,**
**daß** der OPC-Client (1) keinen Internet-Information-Server installiert hat.

14. Verfahren nach einem der vorstehenden Ansprüche,
**dadurch gekennzeichnet, daß** ein Bedien- und Beobachtungssystem des OPC-Client (1) die Bereitstellung des Übertragungskanals als verteiltes Objekt, insbesondere als DCOM-Objekt, initiiert und daß der Verbindungsaufbau zum Automatisierungssystem (5) über einen DCOM-Server und/oder einen OPC-Server (4) erfolgt.

15. System zur Übertragung von OPC-Daten über Datennetze, insbesondere Internet (10), mit mindestens einem OPC-Server (4) , mit mindestens einem OPC-Client (1), mit mindestens einem Datennetz, mit mindestens einer mit dem Datennetz koppelbaren Datenverarbeitungsvorrichtung (1) des OPC-Client (1),
wobei die erste Datenverarbeitungsvorrichtung (1) zum Aufbau mindestens eines ersten Übertragungskanals (6a,7a,8a) an wenigstens einen OPC-Server (4) vorgesehen ist, wobei mindestens ein Übertragungskanal permanent offen ist, welcher zu beliebiger Zeit zum, von Aktionen des OPC-Clients (1) unabhängigen Senden von Daten von wenigstens einem OPC-Server (4) zum OPC-Client (1) über wenigstens ein Datennetz vorgesehen ist.

16. System nach Anspruch 15,
**dadurch gekennzeichnet,**
**daß** das System zur permanenten Aufrechterhaltung des Übertragungskanals zwischen wenigstens einem OPC-Server (4) und wenigstens einem OPC-Client (1) Mittel zur Übertragung von Scheindaten auch beim Nichtvorhandensein von OPC-Nutzdaten aufweist.

17. System nach einem der Ansprüche 15 oder 16,
**dadurch gekennzeichnet,**
**daß** das System zur permanenten Aufrechterhaltung des Übertragungskanals Mittel aufweist, Informationen vom OPC-Server (4) zum OPC-Client (1) zu senden, die dem OPC-Client (1) mitteilen, daß eine Übertragung von Daten beabsichtigt ist.

18. System nach einem der Ansprüche 15 bis 17,
**dadurch gekennzeichnet,**
**daß** das System zur permanenten Aufrechterhaltung des Übertragungskanals , über den vom OPC-Server (4) Datenmengen bis zu einer festgelegten Größe an den OPC-Client (1) übertragen werden, Mittel aufweist, die vor Erreichung der festgelegten Datenmenge eine Aufforderung zu einer neuen Verbindungsanforderung vom OPC-Server (4) an den OPC-Client (1) senden und daraufhin den OPC-Client (1) veranlassen, eine neue Verbindungsanforderung zum Aufbau mindestens eines neuen Übertragungskanals an den OPC-Server (4) zu senden.

19. System nach einem der Ansprüche 15 bis 18,
**dadurch gekennzeichnet,**
**daß** das System als Mittel zur Steuerung der Datenübertragung ein Transportprotokoll, insbesondere ein Internet-Transportprotokoll verwendet.

20. System nach Anspruch 19,
**dadurch gekennzeichnet,**
**daß** das System als Mittel zur Steuerung der Datenübertragung als Transportprotokoll ein Hypertext-Transport-Protocol verwendet.

21. System nach einem der Ansprüche 15 bis 20,
**dadurch gekennzeichnet,**
**daß** das System zum Bedienen und Beobachten eines Automatisierungssystems (5) über wenigstens ein Datennetz, insbesondere über Internet, vorgesehen ist.

22. System nach einem der Ansprüche 15 bis 21,
**dadurch gekennzeichnet,**
**daß** das System Mittel aufweist, die OPC-Daten vor dem Senden über Internet von einer Sendestation in ein internetfähiges Datenformat konvertieren und an eine Empfangsstation über Internet senden und nach dem Senden, die im internetfähigen Datenformat empfangenen Daten von der Empfangsstation wieder in OPC-Daten konvertieren.

23. System nach Anspruch 22,
**dadurch gekennzeichnet,**
**daß** die Sendestation ein OPC-Client (1) und/oder ein OPC-Server (4) ist.

24. System nach Anspruch 22,
**dadurch gekennzeichnet, daß** die Empfangsstation ein OPC-Client (1) und/oder ein OPC-Server (4) ist.

25. System nach einem der Ansprüche 15 bis 24,
**dadurch gekennzeichnet,**
**daß** ein Bedien- und Beobachtungssystem des OPC-Client (1) die Bereitstellung des Übertragungskanals als verteiltes Objekt, insbesondere als DCOM-Objekt, initiiert und daß der Verbindungsaufbau zum Automatisierungssystem (5) über einen DCOM-Server und/oder einen OPC-Server (4) erfolgt.

## Claims

1. Method for transmitting OPC data via data networks, in particular the Internet (10), in which a first connection request to establish at least a first transmission channel is sent from an OPC client (1) via a data connection (6, 7, 8) to at least one OPC server (4), at least one transmission channel (6a, 7a, 8a) being permanently open, which is provided to send OPC data from at least one OPC server (4) to the OPC client (1) via at least one data network at any time and independently of the actions of the OPC client (1).

2. Method according to Claim 1,
**characterized in that** dummy data is transmitted in order to maintain the transmission channel permanently between at least one OPC server (4) and at least one OPC client (1) even when there is no useful OPC data present.

3. Method according to Claim 2,
**characterized in that** the dummy data is sent from the OPC server (4) to the OPC client (1).

4. Method according to Claim 2 or 3,
**characterized in that** when useful OPC data is not present, dummy data is transmitted from the OPC server (4) to the OPC client (1) every 25-35 seconds.

5. Method according to one of the preceding Claims,
**characterized in that** in order to maintain the transmission channel permanently, the OPC server (4) sends the OPC client (1) information, which informs the OPC client (1) that transmission of data is intended.

6. Method according to one of the preceding Claims,
**characterized in that** in order to maintain the transmission channel permanently, via which quantities of data up to a defined order are transmitted from the OPC server (4) to the OPC client (1), a prompt for a new connection request is sent from the OPC server (4) to the OPC client (1) before the defined quantity of data is reached whereupon a new connection request to establish at least one new transmission channel is sent from the OPC client (1) to the OPC server (4).

7. Method according to one of the preceding Claims,
**characterized in that** the quantities of data to be transmitted via the transmission channel are in the order of 15-25 MB.

8. Method according to one of the preceding Claims,
**characterized in that** a transport protocol, in particular an Internet transport protocol, is provided to control the data transmission.

9. Method according to Claim 8,
**characterized in that** the transport protocol provided is a Hypertext Transport Protocol.

10. Method according to one of the preceding Claims,
**characterized in that** the method for operating and observing an automation system (5) is provided via data networks, in particular via the Internet (10).

11. Method according to one of the preceding Claims,
**characterized in that** before being sent via the Internet by a transmitting station, the OPC data is converted to an Internet-compatible data format and sent via the Internet to a receiving station and, following the transmission, the data received in the Internet-compatible format is converted back to OPC data by the receiving station.

12. Method according to one of the preceding Claims,
**characterized in that** the OPC client (1) is not visible in the Internet (10).

13. Method according to one of Claims 1 to 12,
**characterized in that** in the OPC client (1) has not installed an Internet Information Server.

14. Method according to one of the preceding Claims,
**characterized in that** an operating and observation system of the OPC client (1) initiates the provision of the transmission channel as a distributed object, in particular as a DCOM object, and that the connection to the automation system (5) is established via a DCOM server (4) and/or an OPC server (4).

15. System for transmitting OPC data via data networks, in particular the Internet (10), comprising at least one OPC server (4), at least one OPC client (1), at least one data network, at least one data processing device (1) that can be coupled to the data network and belongs to the OPC client (1), the first data processing device (1) being provided to establish at least a first transmission channel (6a, 7a, 8a) to at least one OPC server (4), at least one transmission channel being permanently open, which is provided to send data from at least one OPC server (4) to the OPC client (1) via at least one data network at any time and independently of actions of the OPC client (1).

16. System according to Claim 15,
**characterized in that** the system for maintaining the transmission channel permanently between at least one OPC server (4) and at least one OPC client (1) has means for transmitting dummy data even when there is no useful OPC data present.

17. System according to one of Claims 15 or 16,
**characterized in that** the system for maintaining the transmission channel permanently has means for sending information from the OPC server (4) to the OPC client (1), which informs the OPC client (1) that transmission of data is intended.

18. System according to one of Claims 15 to 17,
**characterized in that** the system for maintaining the transmission channel permanently, via which quantities of data up to a defined order are transmitted from the OPC server (4) to the OPC client (1), has means which, before the defined quantity of data is reached, send a prompt for a new connection request from the OPC server (4) to the OPC client (1) thereupon causing the OPC client (1) to send a new connection request to establish at least one new transmission channel to the OPC server (4).

19. System according to one of Claims 15 to 18,
**characterized in that** the system uses a transport protocol, in particular an Internet transport protocol, as means for controlling the data transmission.

20. System according to Claim 19,
**characterized in that** the system uses a Hypertext Transport Protocol as the transport protocol as means for controlling the data transmission.

21. System according to one of Claims 15 to 20,
**characterized in that** the system for operating and observing an automation system (5) is provided via at least one data network, in particular via the Internet.

22. System according to one of Claims 15 to 21,
**characterized in that** the system has means which convert OPC data before it is sent via the Internet from a transmitting station to an Internet-compatible data format and send said data to a receiving station via the Internet and, following transmission, convert the data received in the Internet-compatible data format from the receiving station back to OPC data.

23. System according to Claim 22,
**characterized in that** the transmitting station is an OPC client (1) and/or an OPC server (4).

24. System according to Claim 22,
**characterized in that** the receiving station is an OPC client (1) and/or an OPC server (4).

25. System according to one of Claims 15 to 24,
**characterized in that** an operating and observation system (1) of the OPC client (1) initiates the provision of the transmission channel as a distributed object, in particular as a DCOM object, and that the connection to the automation system (5) is established via a DCOM server (4) and/or an OPC server (4).

## Revendications

1. Procédé qui est destiné à la transmission de données OPC par l'intermédiaire de réseaux de données, notamment Internet (10) et dans lequel, à partir d'un client OPC (1), on envoie par l'intermédiaire d'une communication de données (6, 7, 8) une première demande de communication pour l'établissement d'au moins un premier canal de transmission vers au moins un serveur OPC (4), au moins un canal de transmission (6a, 7a, 8a) étant ouvert en permanence, lequel est prévu à tout moment pour l'émission, indépendante d'actions du client OPC (1), de données OPC d'au moins un serveur OPC (4) vers le client OPC (1) par l'intermédiaire d'au moins un réseau de données.

2. Procédé selon la revendication 1,
**caractérisé par le fait que**, pour maintenir en permanence le canal de transmission entre au moins un serveur OPC (4) et au moins un client OPC (1), on transmet des données fictives même en l'absence de données utiles OPC.

3. Procédé selon la revendication 2,
**caractérisé par le fait qu'**on envoie les données fictives du serveur OPC (4) au client OPC (1 ).

4. Procédé selon la revendication 2 ou 3,
**caractérisé par le fait que**, en l'absence de données utiles OPC, on transmet les données fictives toutes les 25 à 35 secondes du serveur OPC (4) au client OPC (1).

5. Procédé selon l'une des revendications précédentes,
**caractérisé par le fait que**, pour maintenir en permanence le canal de transmission, le serveur OPC (4) envoie au client OPC (1) des informations qui signalent au client OPC (1 ) qu'une transmission de données est prévue.

6. Procédé selon l'une des revendications précédentes,
**caractérisé par le fait que**, pour maintenir en permanence le canal de transmission, par l'intermédiaire duquel le serveur OPC (4) transmet au client OPC (1) des quantités de données dans les limites d'une dimension fixée, le serveur OPC (4) avant d'atteindre la quantité de données fixée envoie au client OPC (1) une invitation à une nouvelle demande de communication puis le client OPC (1) envoie au serveur OPC (4) une nouvelle demande de communication pour l'établissement d'au moins un nouveau canal de transmission.

7. Procédé selon l'une des revendications précédentes,
**caractérisé par le fait que** les quantités de données à transmettre par l'intermédiaire du canal de transmission ont une dimension de 15 à 25 MB.

8. Procédé selon l'une des revendications précédentes,
**caractérisé par le fait que**, pour la commande de la transmission de données, il est prévu un protocole de transport, notamment un protocole de transport Internet.

9. Procédé selon la revendication 8,
**caractérisé par le fait qu'**il est prévu comme protocole de transport un Hypertext Protocol Transport.

10. Procédé selon l'une des revendications précédentes,
**caractérisé par le fait que** le procédé est prévu pour la commande et le contrôle d'un système automatisé (5) par l'intermédiaire de réseaux de données, notamment Internet (10).

11. Procédé selon l'une des revendications précédentes,
**caractérisé par le fait qu'**on convertit des données OPC avant l'émission via Internet dans une station d'émission en un format de données compatible avec Internet et on les envoie à une station de réception via Internet et, après l'émission, on reconvertit les données reçues au format de données compatible avec Internet en données OPC dans la station de réception.

12. Procédé selon l'une des revendications précédentes,
**caractérisé par le fait que** le client OPC (1) n'est pas visible dans Internet (10).

13. Procédé selon l'une des revendications 1 à 12,
**caractérisé par le fait que** le client OPC (1 ) n'a pas installé de serveur d'information Internet.

14. Procédé selon l'une des revendications précédentes,
**caractérisé par le fait qu'**un système de commande et de contrôle du client OPC (1) déclenche la mise à disposition du canal de transmission comme objet réparti, notamment comme objet DCOM, et que l'établissement de communication vers le système automatisé (5) s'effectue par l'intermédiaire d'un serveur DCOM et/ou d'un serveur OPC (4).

15. Système qui est destiné à la transmission de données OPC par l'intermédiaire de réseaux de données, notamment Internet (10), et qui comprend au moins un serveur OPC (4), au moins un client OPC (1), au moins un réseau de données, au moins un dispositif de traitement de données (1), pouvant être connecté au réseau de données, du client OPC (1), le premier dispositif de traitement de données (1) étant prévu pour l'établissement d'au moins un premier canal de transmission (6a, 7a, 8a) vers au moins un serveur OPC (4), au moins un canal de transmission étant ouvert en permanence, lequel est prévu à tout moment pour l'émission, indépendante d'actions du client OPC (1), de données d'au moins un serveur OPC (4) vers le client OPC (1 ) par l'intermédiaire d'au moins un réseau de données.

16. Système selon la revendication 15,
**caractérisé par le fait que**, pour maintenir en permanence le canal de transmission entre au moins un serveur OPC (4) et au moins un client OPC (1), le système comporte des moyens pour la transmission de données fictives même en l'absence de données utiles OPC.

17. Système selon l'une des revendications 15 ou 16,
**caractérisé par le fait que**, pour maintenir en permanence le canal de transmission, le système comporte des moyens pour envoyer du serveur OPC (4) au client OPC (1) des informations qui signalent au client OPC (1) qu'une transmission de données est prévue.

18. Système selon l'une des revendications 15 à 17,
**caractérisé par le fait que**, pour maintenir en permanence le canal de transmission par l'intermédiaire duquel le serveur OPC (4) transmet au client OPC (1) des quantités de données dans les limites d'une dimension fixée, le système comporte des moyens qui, avant d'atteindre la quantité de données fixée, envoient au client OPC (1) une invitation à une nouvelle demande de communication du serveur OPC (4) puis qui incitent le client OPC (1) à envoyer au serveur OPC (4) une nouvelle demande de communication pour l'établissement d'au moins un nouveau canal de transmission.

19. Système selon l'une des revendications 15 à 18,
**caractérisé par le fait que** le système utilise comme moyen pour la commande de la transmission de données un protocole de transport, notamment un protocole de transport Internet.

20. Système selon la revendication 19,
**caractérisé par le fait que** le système utilise comme moyen pour la commande de la transmission de données comme protocole de transport un Hypertext Transport Protocol.

21. Système selon l'une des revendications 15 à 20,
**caractérisé par le fait que** le système est prévu pour la commande et le contrôle d'un système automatisé (5) par l'intermédiaire d'au moins un réseau de données, notamment Internet.

22. Système selon l'une des revendications 15 à 21,
**caractérisé par le fait que** le système comporte des moyens qui convertissent des données OPC avant l'émission via Internet dans une station d'émission en un format de données compatible avec Internet et les envoient à une station de réception via Internet et, après l'émission, reconvertissent les données reçues au format de données compatible avec Internet en données OPC dans la station de réception.

23. Système selon la revendication 22,
**caractérisé par le fait que** la station d'émission est un client OPC (1) et/ou un serveur OPC (4).

24. Système selon la revendication 22,
**caractérisé par le fait que** la station de réception est un client OPC (1) et/ou un serveur OPC (4).

25. Système selon l'une des revendications 15 à 24,
**caractérisé par le fait qu'**un système de commande et de contrôle du client OPC (1) déclenche la mise à disposition du canal de transmission comme objet réparti, notamment comme objet DCOM, et que l'établissement de communication vers le système automatisé (5) s'effectue par l'intermédiaire d'un serveur DCOM et/ou d'un serveur OPC (4).
